# EUROPEAN PATENT APPLICATION

(11) **EP 2 881 931 A1**
(43) Date of publication of application: **10.06.2015**
(21) Application number: 12882632.8
(22) Date of filing: 16.11.2012
(51) Int. Cl.: G09F 11/02

(54) **ADVERTISING DISPLAY STAND**

(30) Priority: 06.08.2012 ES 201230864
(71) Applicant: Amiserru, S.L., 08190 Sant Cugat del Vallés, Barcelona (ES)
(72) Inventor: IGLESIAS BALLESTER, Miguel Angel, E- 08190 Sant Cugat Del Valles (Barcelona) (ES)
(74) Representative: Maldonado Jordan, Julia
(86) International application number: PCT/ES2012/070798
(87) International publication number: WO 2014/023858

(57) **Abstract**

The invention relates to an advertising display stand that includes a support frame and a plate that can be rolled up and that displays advertising themes. A motorized drum and a plate that displays advertising themes are mounted in the support frame, which is open at least on the front and back sides, which plate is fixed by one of the ends thereof to the motorized drum for longitudinal displacement with respect to the frame between; an extended display position in which same closes the space defined by the frame, remaining displayed in same, and a rolled up position on the motorized drum, in which the interior of the frame remains free, said frame defining and open passage area.

## Description

### Object of the invention

The invention refers to an advertising display stand having a support frame and a web, which can be rolled up and down, displaying the advertising themes. This advertising stand has constructive peculiarities aimed at permitting its installation in cavities or passage areas, concealing the same and obtaining a profit therefrom as publicity spaces.

### Field of the invention

The invention is applicable to passage areas for the presentation or exhibition of publicity, understanding as passage areas those which are able to permit the passage of persons or vehicles.

### State of the art

At present there are in the market various advertising display stands which adopt in general the form of a web bearing the advertising themes to be exhibited.

In some cases, the exhibition web is arranged statically on a support which may adopt different structures, including a panel on which the advertising web is fixed by gluing and also publicity bearing fences or marquees having a perimetric frame with glasses to permit the visualization of the advertising web mounted inside.

Advertising display stands are also known having a lengthy publicity bearing web having multiple advertisements distributed along the web, which is arranged inside of a holding frame being the opposite ends of said web rolled on respective drums which rotate simultaneously so that the publicity bearing web moves from one to the other drum exhibiting successively the different publicity advertisements provided on the same.

A publicity support of this type, with a movable web, is disclosed in the document ES1066874U.

All of the advertising display stands cited above, that is, both those having a static advertising web divided into panels or fixed on support fences, as well as those having a movable advertising web mounted on two end driving rollers, arranged on a supporting frame, require for its installation the use of an space exclusively reserved to the publicity purposes.

This brings about an additional problem consisting in the difficulty to find available spaces to increase the publicity surface in shopping centers, as in this type of shopping spaces it is necessary to make the available space profitable given its high cost, using the spaces for the exhibition of the products on sale both in wall shelves, as in other shelving structures or islets included within the shopping space.

The use of the space for economically more profitable purposes reduces the possibility to include additional publicity in the mentioned type of shopping centers, in spite of the fact of being an appropriate area for publicity given the high number of persons going to said shopping centers.

### Description of the invention

To solve the above explained problems the advertising display stand which is the object of this invention has been developed having constructive peculiarities aimed at permitting its location in free spaces or passage areas, without preventing these spaces to be used for other purposes, contrarily to what happens with the advertising display stands presently known in the market, which prevent any other use of the space in which they are located.

The advertising display stand of this invention provides therefore a new space for the exhibition of publicity in passage areas, which was not possible with the presently known advertising display stands.

To this end and according to the invention, this advertising display stand consists in a supporting frame, open at least from the front and rear faces, in which the motor driven drum and exhibition web bearing advertising themes are mounted. The exhibition web is secured by the one of its ends to the motor driven drum, having the possibility of moving lengthwise on the supporting frame between an extended exhibition position in which the web closes the space limited by the supporting frame the web being visible on the same, and a rolled up position on the motor driven drum in which the internal space of the supporting frame is free, said supporting frame delimiting an open passage area.

In one embodiment, the supporting frame has a four cornered structure being open as well in its lower end. In this embodiment, the frame consists in an upper box in which the motor driven drum is located for vertically, rolling up and down the exhibition web, having two vertical guides located in correspondence with the ends of the upper box.

The vertical guides have lengthwise openings opposed to each other for the location and vertical guidance of the side borders of the advertising webs.

To increase the exhibition capacity this advertising display stand may have two or more independent or synchronised motor driven drums for rolling up and down the respective exhibition webs.

In this case, the vertical guides may have a pair of longitudinal openings opposed each other, one for each of the exhibition webs.

In the same way, it may be foreseen that the different exhibition webs move along a unique guide.

Each of the exhibition webs, made out of a flexible material, is secured by its upper end to the corresponding motor driven drum for rolling up and down the web, the lower end being free and bearing a counterweight for its vertical tensioning. Said exhibition webs have in its side borders respective thickenings for its guidance within the corresponding vertical guides of the frame during the movements of the exhibition web between the rolled up upper position and the rolled down extended position.

In the upper rolled up position, the exhibition web is concealed within the upper box of the device so that the internal space of the frame is left free defining an open passage area.

In the rolled down extended position, the exhibition web is vertically extended exposing advertising themes.

To optimize the operation of the device as well as the exhibition time for the advertising themes, this device has a control unit for the hand or automatic driving of the drum or drums provoking the rolling up and the rolling down of the corresponding exhibition web.

To this end, said control unit has push buttons and/or pulling knobs for the hand operation of the advertising display stand, remote control means and/or presence sensors, to detect the oncoming of persons or objects towards the place or passage area in which the advertising display stand of the invention is located, provoking the automatic operation of the same.

In the automatic mode, the normal position of the exhibitor has the exhibition web extended exposing advertising themes, the presence sensors being aimed at provoking the automatic rolling up of the web to leave the passage area free when said sensors detect the oncoming of persons or objects towards the advertising display stand.

Given the fact that the advertising display stand may be located in passage areas and it may receive the impact of persons, objects or machines which could result in the web or webs being expelled out of the guides, it is foreseen to provide to the assembly of webs-guides of so called self reparation means, so that in automatic form and without the assistance of external operators the web or webs can regain its corresponding guides.

With the purpose to guarantee that the publicity bearing web maintains appropriate exhibition positions when it is extended or rolled down and taking into account that the web is only suspended from the motor driven drum, the longitudinal openings of the vertical guides have a narrow entrance permitting the free passage of the exhibition web, however showing a restraining action for the lateral thickenings of the web inside of said vertical guides.

According to the invention, the advertising themes may be defined, fixed or printed on the exhibition web or webs, or eventually they may be projected on said web or webs by means of a projector located to a given distance from the supporting frame and oriented to the area which is delimited by said frame in which the exhibition web will be arranged when in an extended position.

### Description of the drawings

To complement the description of this invention and with the aim to facilitate the understanding of its characteristics some drawings are enclosed in which in an illustrative but non limitative form, the following has been shown:
- Figure 1 shows a diagrammatic front view of the advertising display stand according to the invention, with the exhibition web extended, exposing the advertising themes lying on the same and covering the space delimited by the support frame.
- Figure 2 shows a similar view as the above with the advertising web in its upper position, rolled up on the driving drum and concealed within the upper box of the support frame, the space delimited by the frame being free and defining an open passage area.
- Figure 3 shows a diagrammatic top view of the advertising display stand of the invention in cross section by a horizontal plane in which the lateral thickenings of the web may be observed in respect to the vertical guides of the frame.
- Figure 4 shows a diagrammatical side view of an embodiment variant of the advertising display stand having two motor driven drums for driving corresponding exhibition webs.
- Figure 5 shows a diagrammatic perspective view of an embodiment variant in which the advertising display stand has a projector for projecting images or publicity themes on the exhibition web when this is extended or rolled down, covering the internal space of the frame.

### Preferred embodiment of the invention

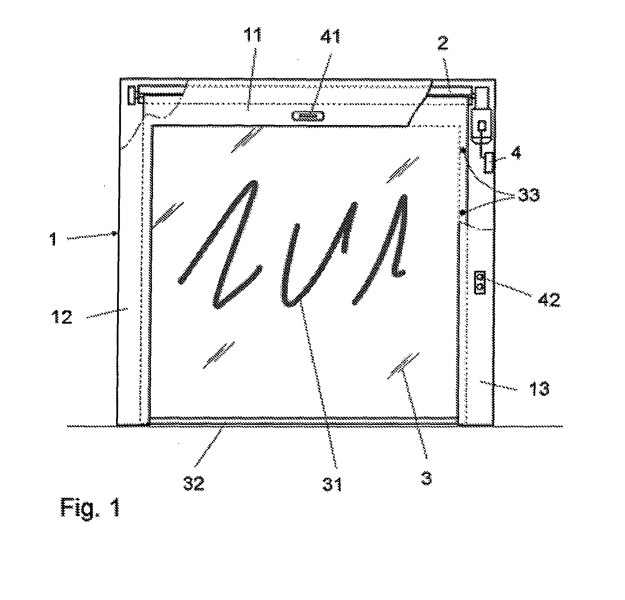

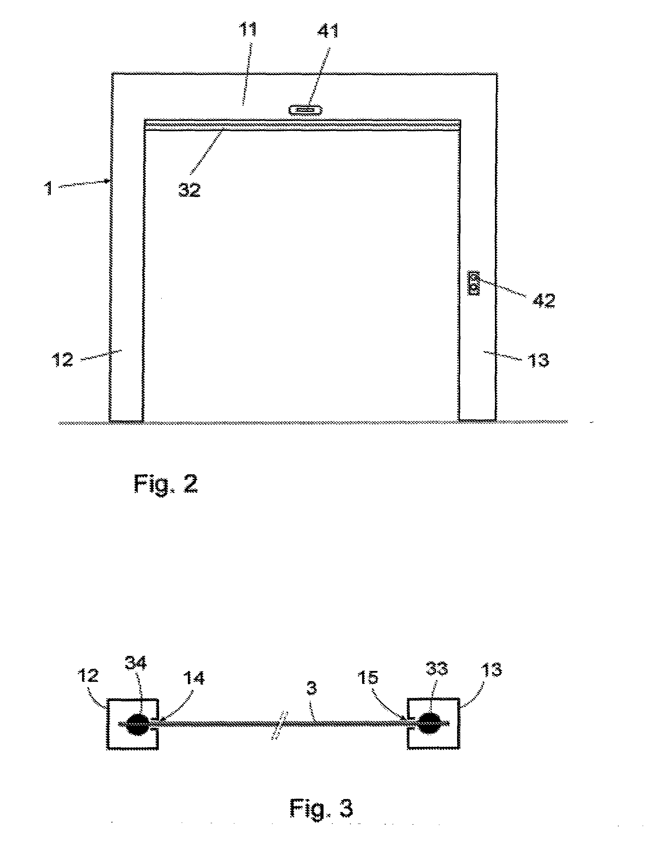

In the example embodiment shown in figures 1 to 3, the advertising display stand has a supporting frame (1) consisting in an upper box (11) and two vertical guides (12, 13) having corresponding longitudinal openings (14, 15) opposed each other as shown in figure 3.

Inside the upper box (11) the motor driving drum (2) is located, to which the upper end of the flexible exhibition web (3) is secured, such web bearing the advertising themes (31) to be exposed.

The exhibition web (3) has in its lower end a counterweight (32) for its vertical tensioning and it has on its side borders corresponding thickenings (33, 34) located inside of the respective vertical guides (12, 13).

As is to be observed in figure 3 the borders or side ends of the exhibition web freely pass along the longitudinal openings (14, 15) of the vertical guides (12, 13), the thickenings (33, 34) or the exhibition web moving vertically internally within the vertical guides (12, 13) when said web is rolled up or rolled down on the driven drum (two) and consequently it moves vertically in ascending or descending sense.

As is to be observed in figure 1, when the exhibition web (3) is rolled down the advertising themes (31) are exposed in a clearly visible position.

When said exhibition web (3) is rolled up on the driving drum (2) it is concealed inside the upper box (11) and the space delimitated by the frame is left free defining and open passage area as shown in figure 2.

As mentioned above, given that the purpose of this advertising display stand is to be installed in a passage area, it has a control unit (4) which operates the motor driven drum (2) provoking the rolling up or rolling down of the exhibition web.

The control unit (4) may operate automatically based on signals received from presence sensors (41) which are connected to said control unit (4) being its function to detect the oncoming of persons of objects towards the passage area in which the advertising display stand is installed.

Said control unit (4) may be also commanded manually by means of push buttons (42) to be manually operated.

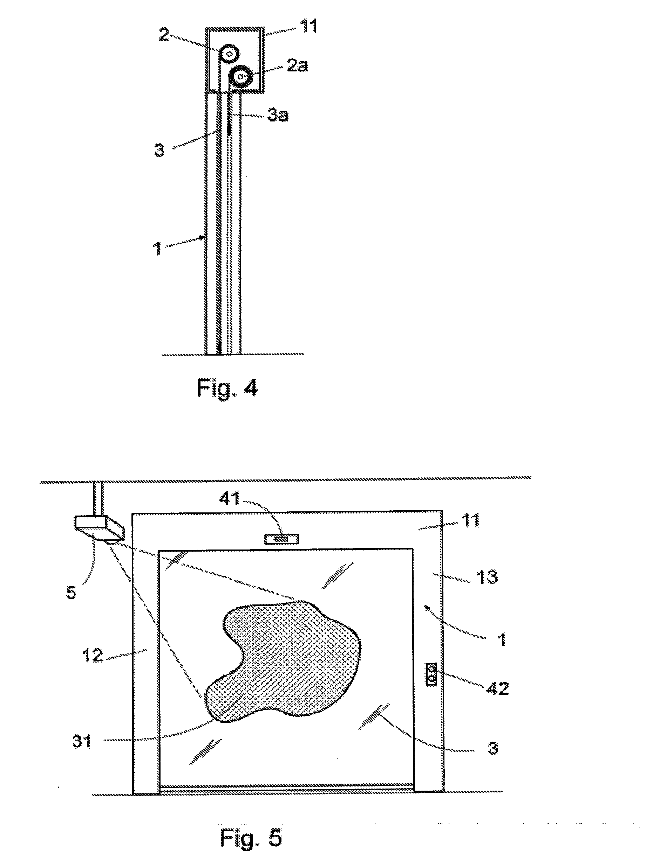

In the embodiment shown in figure 4, the advertising display stand has a second motor driven drum (2a) for operating a second movable exhibition web (3a) for the additional presentation of advertising themes in its rolled down position.

As mentioned above, the advertising themes (31) may be incorporated on the exhibition web (3), as shown in figure 1, or they may be projected by means of a projector (5) as shown in figure 4 on any of the exhibition webs (3, 3b) which may be rolled down, that is, in extended position.

After having sufficiently described the nature of the invention, and a preferred embodiment example of the same it is stated to all effects that the materials, shape, size and arrangement of the described elements may be modified whenever it does not suppose an alteration of the essential characteristics of the invention which will be claimed as follows.

## Claims

1. Advertising display stand having a support frame and an exhibition web bearing advertising themes, which can be rolled up and down, **characterized in that** the support frame is open on its front and rear faces, being mounted on the frame a motor driven drum and the exhibition web bearing advertising themes, the exhibition web being secured by one of its ends to the motor driven drum and being able to longitudinally move in respect to the frame between and extended exhibition position in which it closes the space delimitated by the frame, the web being exposed on the same, and a position in which it is rolled on the motor driven drum in which position it leaves the internal part of the frame free, said frame delimitating an open passage area.

2. Advertising display stand according to claim 1, **characterized in that** the support frame, of a four cornered structure, is open in its lower part and consists of an upper box in which the motor driven drum is located, for vertically rolling up and down the exhibition web, having as well two vertical guides arranged in correspondence with the opposed ends of the upper box, and having corresponding longitudinal openings opposed to each other, for receiving and vertically guiding the side borders of said exhibition web.

3. Advertising display stand according to any of the previous claims, **characterized in that** the exhibition web, made out of a flexible material is secured by its upper end to the motor driven rolling drum and has a is lower end free bearing a counterweight for its tensioning in a vertical direction and having in its side borders respective thickenings for its guidance inside of the corresponding vertical guides of the frame during the vertical displacement of the web between the rolled up upper position and the rolled down extended position.

4. Advertising display stand according to claim 1, **characterized in that** it comprises a control unit for the operation of the motor driven drum, said control unit having push buttons and/or traction knobs for the manual operation of the exhibitor, as well as remote control means and/or presence sensors for the automatic operation of the exhibitor.

5. Advertising display stand according to claim 1, **characterized in that** the longitudinal openings of the vertical guides have a narrow entrance permitting the free passage of the exhibition web and for retaining the lateral thickenings of the web inside of said vertical guides.

6. Advertising display stand according to claim 2, **characterized in that** it has two or more motor driven drums for the independent or synchronised operation of respective exhibition webs.

7. Advertising display stand according to claim 6, **characterized in that** the various exhibition webs can move within an unique guide.

8. Advertising display stand according to claim 2, **characterized in that** it has means permitting, in case that the exhibition web is expelled from the guides, that the web automatically returns into the guides without the intervention of operators.

9. Advertising display stand according to claim 6, **characterized in that** the vertical guides have two opposed each other openings each for guiding an exhibition web.

10. Advertising display stand according to any of the previous claims, **characterized in that** the advertising themes are defined, fixed or printed on the surface of the exhibition web or webs.

11. Advertising display stand according to any of claims 1 to 7, **characterized in that** it has at least an image projector which projects the advertising themes on the exhibition web when said exhibition web is extended or rolled down.
